**Europäisches Patentamt**

**European Patent Office**

**Office européen des brevets**

(11) Publication number: **0 100 304**
**B2**

(12) # NEW EUROPEAN PATENT SPECIFICATION

(45) Date of publication of the new patent specification: **14.03.90**

(21) Application number: **83850142.7**

(22) Date of filing: **24.05.83**

(51) Int. Cl.⁵: **G 01 P 5/18, G 01 F 1/56**

(54) **Method and apparatus for determining the flow velocity of a molten, radiation-emitting material.**

(30) Priority: **11.06.82 SE 8203650**

(43) Date of publication of application:
**08.02.84 Bulletin 84/06**

(45) Publication of the grant of the patent:
**27.08.86 Bulletin 86/35**

(45) Mention of the opposition decision:
**14.03.90 Bulletin 90/11**

(84) Designated Contracting States:
**AT BE CH DE FR GB IT LI LU NL**

(56) References cited:
**EP-A-0 054 532**
**DE-C-2 449 358**
**GB-A-1 340 654**
**GB-A-1 439 324**
**US-A-3 388 328**
**US-A-3 739 636**
**US-A-3 941 477**

(73) Proprietor: **Gedevelop Aktiebolag**
**Fack 530**
**S-260 50 Billesholm (SE)**

(72) Inventor: **Ransheim, Anders P.**
**Uppsalagatan 7**
**S-252 50 Helsingborg (SE)**
Inventor: **Thomsen, Arne**
**Villagatan 1**
**Astorp (SE)**
Inventor: **Holmgren, Per**
**Källvägen 17 A**
**S-262 00 Angelholm (SE)**

(74) Representative: **Carminger, Lars**
**Carminger, Uusitalo & Nyberg Patentbyra AB**
**Box 19055**
**S-104 32 Stockholm (SE)**

# Description

The present invention relates to a method and a corresponding apparatus for measuring the flow velocity of a flow, stream or jet of a molten, radiation-emitting material. The invention has been made primarily for measuring the flow velocity of a freely falling jet of molten glass, but it can be used also for other molten, radiation-emitting materials, as ceramic or mineral materials and metals. A development of the invention concerns also measuring the volumetric or mass flow rate of a stream, flow or jet of molten radiation-emmitting material by measuring the flow velocity as well as the diameter of the stream, flow or jet and calculating the volumetric flow rate on the basis of these measured data.

As will be understood, when measuring the flow velocity of a molten material, there must be no mechanical contact with the material. Methods for measuring the velocity of movement of elongate solid objects, such as for instance wire, strip, paper-webs and the like, without mechanical contact with the object are previously known. In these known methods the moving object is provided with regularly spaced marks and a measurement is taken of the time taken for these marks to travel between two mutually spaced locations along the path of the moving object is measured. In this instance, these marks may comprise coloured dots on or locally heated sections of the object such locally heated sections being provided by periodically irradiating the object by means of short radiation pulses from an IR radiation source. However, this method can not, of course, be used for measuring the flow velocity of a molten material which is itself radiative. It is also previously known to measure the flow velocity of a liquid containing gas bubbles, by directing a light beam through the liquid flow at two mutually spaced locations, and by detecting the passage of gas bubbles in the liquid at these locations, so as to determine the travel time of the gas bubbles an thus the travel time of the liquid between said two locations. As will be understood, it is also impossible to use this method for determining the flow velocity of a molten material which is itself radiative, such as, for instance, a freely falling jet of molten glass.

In reality, there is no satisfactory known method for determinng with sufficient accuracy the flow velocity of a stream, flow or jet of a molten radiative material, as for instance a freely falling jet of molten glass.

The present invention relates to a novel and very satisfactory and advantageous method for this purpose. The method according to the invention is based on the discovery that a stream, flow or jet of a molten radiation-emitting material, such as molten glass in particular, emits radiation of such a character that when detecting radiation emitted from a limited section of the material flow, for instance by means of a suitable radiation detector, although the major part of the output signal from said detector will have a noise-character, the signal will also contain pulse-like, extremely large amplitude variations, which appear randomly in the signal. These short and large amplitude-variations in the output signal of the detector must find correspondence in local, discrete and randomly occurring variations in the intensity of the radiation emitted by the material, which variations are most probably caused by local, discrete, randomly occurring inhomogeneities in the material. In molten glass, these inhomogeneities probably consist of air bubbles in the molten glass, since it has been found that said pulse-like intensity variations in the radiation also appear with glass-materials with great purity. For other molten radiation-emitting materials, such as ceramic and mineral materials, similar gas or air bubbles are probably present and will give cause to similar, pulse-like, randomly occurring intensity variations in the emitted radiation. In molten metals there are also in most cases local, discrete inhomogeneities, for instance in the form of slag particles, which can give rise to similar pulse-like, randomly occurring intensity variations in the radiation emitted by the material.

The invention is based on the assumption that these pulse-like, randomly occurring intensity variations in the radiation emitted by the material can be used to determine the flow velocity of the material, by detecting the radiation emitted from a limited section of the material flow at two mutually spaced locations along its flow path, and by measuring the time interval between the occurrence of such a pulse-like intensity variation at an upstream location and the occurrence of the same pulse-like intensity variation at a downstream location.

However, the fact that these variations in intensity occur completely randomly, and consequently with a varying mutual spacing in time, creates a serious problem when applying this measuring principle. In order to measure the flow velocity of the material correctly, however, it must be possible to determine the time interval between detections of exactly the same intensity variation at the two mutually spaced locations along the path of the flow. This is not easily achieved, as the intensity variations occur completely randomly and one intensity variation can not readily be distinguished from another intensity variation.

One possible solution to this problem is proposed in Swedish patent application No. 800 884-0. This proposed solution is based on the concept of measuring these time intervals only with respect to those variations in intensity which occur in the location of the upstream detector after a period of time has lapsed in which no intensity variations occurred, this time period positively exceeding the time taken for the flow of material to pass between the two detecting locations. This ensures, satisfactorily, that only the correct time-interval, and therewith the correct flow velocity of the material, will be measured.

The present invention relates to another method of solving the same problem.

The method and corresponding apparatus according to the invention for determining the flow velocity of a freely falling stream of molten glass have the features set-forth in following claims 1, 2 and 5, respectively.

A further embodiment of the invention relates to a method and corresponding apparatus for determining the volumetric flow rate of a freely falling stream of molten glass having the features set-forth in following claims 3, 4 and 6—8, respectively.

US—A—3 941 477 discloses a method and an apparatus for measuring the flow rate of a stream of a gas containing light reflecting particles. Two laser light beams are directed through the gas stream at two separate locations mutually spaced in the flow direction of the gas stream. Light reflected by the particles in the gas stream at said two locations is detected by means of two photo detectors and the photo detector receiving light reflections from the upstream location generates start pulses for a saw-tooth generator and the photo detector receiving light reflections from the downstream locations generates stop pulses for said saw-tooth generator. The amplitude values of the generated saw-tooth wave is converted to a series of pulses each having an amplitude corresponding to the time interval between a start pulse and a following stop pulse. This series of pulse height signals is supplied to a plurality of amplitude filters for mutually different amplitude ranges. The output of each amplitude filter is connected to a counter for counting the number of pulse height signals passing through the filter, i.e. having an amplitude falling within the amplitude range of the filter. The counters are scanned periodically for determining which counter is containing the highest count value. The amplitude range of the filter connected to this counter having the highest count value is a measure of the time taken by the gas stream for flowing between the locations of the two laser beams.

The invention will now be described in more detail with reference to the accompanying drawings, in which

Fig. 1 illustrates schematically and by way of example the typical configuration of an output signal from a photodetector receiving radiation emitted from a limited section of a jet of molten glass;

Fig. 2 illustrates schematically apparatus constructed in accordance with the invention for measuring the flow velocity of a jet of molten glass;

Fig. 3 is a diagram illustrating the principle on which the invention is based;

Fig. 4 illustrates schematically apparatus according to another embodiment of the invention for measuring the diameter of a stream, flow or jet of molten radiation-emitting material for determining the volumetric flow rate of the material; and

Fig. 5 is a diagram illustrating the principles of operation of the apparatus illustrated in Figure 4.

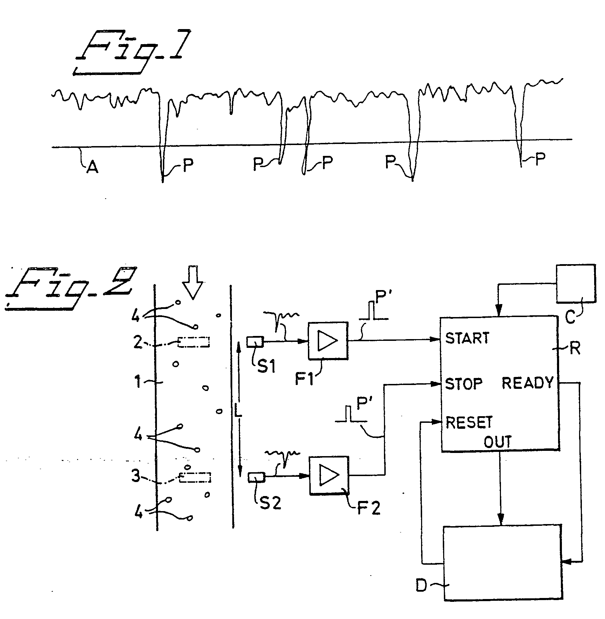

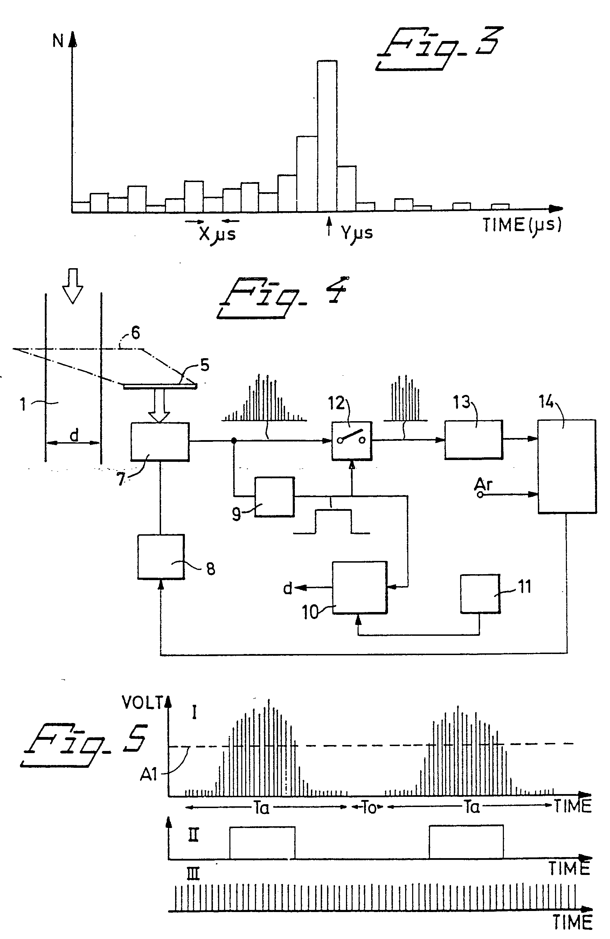

Fig. 2 illustrates schematically an embodiment of an apparatus according to the invention for measuring the flow velocity of a freely falling jet 1 of molten glass.

The apparatus comprises two radiation detectors S1 and S2, which are spaced apart at a predetermined mutual distance L along the glass jet 1 and are arranged to receive, through a suitable optical system not shown in detail, radiation from two limited sections of the glass jet. In the drawing these two limited sections of the glass jet are schematically illustrated by broken-line rectangles 2 and 3, respectively. Thus, these rectangles can be regarded as 'viewing windows' for the radiation detectors S1 and S2, respectively. Each of the detectors provides an electric output signal having, in principle, the form illustrated by way of example in Fig. 1. Although the major part of this signal has the nature of a noise signal, it also comprises a plurality of randomly occurring, pulse-like, large amplitude variations P. These amplitude variations P are caused by randomly occurring, intensity variations of short duration in the radiation emitted by the glass jet 1. In turn, these intensity variations are most probably caused by randomly occurring air bubbles 4 in the glass material. When an air bubble passes the viewing window 2 or 3, it causes a pulse-like amplitude variation P in the output signal from the associated detector S1 or S2, respectively, the magnitude of this amplitude variation being dependent inter alia on the size of the bubble and its distance from the external surface of the glass jet 1. It will be realized that the time of travel of a given air bubble from the upstream viewing window 2 to the downstream viewing window 3 will be equal to the time taken for the glass jet 1 to travel the distance L, wherefore it can be used for determining the flow velocity of the glass jet in accordance with the expression

$$V = L/T$$

were V is the flow velocity and T is the travel time of the air bubble.

Each of the output signals from the two detectors S1 and S2 are applied to a respective amplifying and signal-processing circuit F1 and F2. Each circuit F1 and F2, respectively, discriminates from the output signal of the associated radiation detector any pulse-like amplitude variations P having an amplitude exceeding a predetermined amplitude level, for instance the amplitude level A in Fig. 1, and provides on its output a corresponding signal pulse P' for each such amplitude variation P.

These signal pulses P' from the amplifier F1 are applied to the start input and to the stop-input respectively of a time measuring circuit R, which may comprise a digital counter driven from a clock pulse generator C. Thus, the time measuring circuit R is started by an air bubble 4 in the glass jet 1 passing the viewing window 2 of the upstream detector S1, and is stopped again as soon thereafter as an air bubble 4 passes the viewing window 3 of the downstream detector S2. When the time-measuring circuit R has in this way measured a time interval, it sends a ready signal to a calculating unit D, for instance comprising a micro-processor, which receives the measured value from the output of the time measuring circuit and at the same time resets said circuit. The time measuring circuit R is subsequently restarted as soon as an air bubble 4 passes the viewing window 2 for the upstream detector S1.

In order to ensure that the time interval measured by the time measuring circuit R actually corresponds to the travel time of the glass jet 1 over the distance L between the detectors S1 and S2, it is obviously necessary that the time measuring circuit R is started and stopped under the influence of precisely one and the same air bubble 4 in the glass jet 1. As will be understood, this will only be the case if there are no bubbles 4 present in the space between the viewing windows 2 and 3 at the time when a bubble passes the upstream window 2 and starts the time measuring circuit R. However, since the air bubbles 4 are completely randomly located in the glass jet 1, in the majority of cases bubbles 4 will be present, in practice, between the windows 2 and 3 when the time circuit R is started by a bubble 4 passing the window 2. In these instances, the timing circuit R will be stopped prematurely by one of the bubbles already present between said windows 2 and 3, and hence the time interval measured by the timing circuit R will be too short. It may also be that the time interval measured by the timing circuit R is too long, for example when the bubble 4 which passes the upstream window 2 and initiates the timing circuit R does not, for some reason or other, pass the downstream window 3, e.g. because of irregular flow in the glass jet 1, and therewith does not influence the downstream detector SZ. In this case, the time-measuring circuit R will be stopped by a later, subsequent bubble 4 and the time interval measured will be too long.

Despite these difficulties, however, it is possible by means of the calculating unit D, when practicing the invention, to obtain correct information concerning the «correct» time interval, i.e. the time taken for an air bubble 4, and therewith the glass jet 1, to travel the distance L between the viewing windows 2 and 3. According to the invention this is effected in that the calculating unit D recieves from the time-measuring circuit R, and stores a large number of time intervals, for example 100 time intervals, measured in the manner described above. The calculating unit D is designed or programmed to sort or classify these measured time intervals with respect to their values, and to determine the most frequently occurring value of these measured time intervals received by and stored in the calculating unit. Thus the calculating unit D sets up a hostogram of the kind illustrated in Fig. 3, in which histogram the horizontal axis represents the values of the measured time intervals in classes or groups each having a width of Xµs, and the vertical axis represents the number of measured time intervals N within each class or group. It is found that this histogram displays a single distinct peak or maximum for the class or group within which the correct time interval is located, i.e. the class or group having the center value Yµs in Fig. 3. Since the bubbles 4 appear completely randomly within the glass jet 1, the «erroneously» measured time intervals will be spread out along the tme axis, mainly as too short time intervals, whereas all the correct measured time intervals will be placed at one and the same location along the time axis. This analysis of the measured time intervals received from the time measuring circuit 3 is performed automatically by the microprocessor in the calculating unit D, when this has received a predetermined number of measured time intervals, for instance 100. It has been found that such a distinct peak or maximum in the histogram is obtained, if the amount of randomly occurring bubbles 4 in the glass jet 1 is such that the distance between two mutually sequential bubbles, which both pass viewing windows 2 and 3 and give rise to signal pulses P' from the amplifiers F1 and F2, is greater than the distance L between the windows 2 and 3 in at least 8 to 10% of all cases.

The calculating unit D could, per se, use the center value Y for the largest class of measured time intervals according to Fig. 3 as the wanted value of the travel time of the glass jet 1 over the distance L between the windows 2 and 3, and consequently calculate the flow velocity of the jet on the basis of this value in accordance with the expression given in the foregoing. However, greater accuracy is achieved, when the calculating unit D is designed and programmed in such a way that after having determined the value Y in the manner described above on the basis of a first plurality of measured time intervals, for instance 100, it accepts thereafter only such measured time intervals received from the time measuring circuit R as those which have values within a limited range on both sides of the value Y, i.e. within the range Y ± Z%. The calculating unit D thereafter collects a predetermined number for instance 100, of such accepted measured time intervals and calculates the mean value of these accepted measured time intervals. This mean value is then regarded as the correct value of the travel time of the glass jet 1 over the distance L between the viewing windows 2 and 3. Preferably, this mean value is updated, by calculating a new mean value for each new accepted measured time interval received from the time measuring circuit R, so that the mean value is always calculated on the basis of, for example the last hundred accepted measured time intervals received. Further, the value Y is changed continuously, so as to be equal to the mean value last calculated, whereby the only measured time intervals arriving from the time measuring circuit R which will be accepted are those which have values within the range ±Z% on both sides of the last calculated mean value. In this way the measuring process will automatically follow the variations in the flow velocity of the glass jet 1. Should the calculating unit not receive any acceptable measured time intervals from the time measuring circuit R during a predetermined period of time, the calculating unit D will restart the process from the beginning, and establish a new histogram according to Fig. 3 in the manner described above, in order to find a correct value of Y. This may, for instance, be necessary in connection with very rapid changes in the flow velocity of the glass jet.

As mentioned above, it is sufficient if the number of «accepted», i.e. correct, measured time intervals from the time measuring circuit R is at least about 8 to 10% of the total number of measured time intervals. This can be achieved by an appropriate selection of the distance L between the viewing windows 2 and 3, the size of the viewing windows and the magnitude of the threshold amplitude level A in the amplifiers F1 and F2 in relation to the number of air bubbles 4 present in the glass jet, and to the velocity of the glass jet, in such a manner that the mutual spacing, in time between mutually sequential signal pulses P' in each of the output signals from respective amplifiers F1 and F2 exceeds the travel time of the glass jet between the viewing windows 2 and 3 in at least about 8 to 10% of all cases. It will be realized that if the distance between the viewing windows 2 and 3 is made smaller, then the spacing in time between mutually sequential signal pulses P' will increase relative to the time taken for the glass jet 1 to travel between the viewing windows. In a similar way, a reduction of the size of the viewing windows 2 and 3 will reduce the number of bubbles 4 passing these windows and influencing the detectors S1 and S2, wherefore the mutual spacing in time between mutually sequential signal pulses P' will increase for an unchanged total number of bubbles in the glass jet 1 and an unchanged flow velocity of the jet. In a similar way, a larger threshold amplitude level A in the amplifiers F1 and F2 will reduce the number of signal pulses P' and consequently increase the mutual spacing in time between mutually sequential signal pulses P' for an unchanged total number of bubbles 4 in the glass jet and an unchanged flow velocity of the jet.

As mentioned in the foregoing, an apparatus according to the invention can be further developed to determine not only the flow velocity of the material but also its volumetric flow rate, which is of interest in many fields of application, such as glass-fiber production, for example where it is important to be able to measure the volumetric rate of flow of the freely falling jet of molted glass down to the spinners. For this purpose it is necessary to determine the diameter of the jet, in addition to its flow velocity.

The diameter of the glass jet can advantageously be measured by means of such an apparatus as that illustrated schematically in Fig. 4. This apparatus comprises a linear array of photodiodes 5, which through a suitable optical system, not shown in detail in the drawing, is arranged to receive radiation emitted by the glass jet 1 along a line 6 which is perpendicular to the direction of flow of the glass jet. It will be appreciated that of the array 5 a number of diodes corresponding to the diameter d of the glass jet 1 will receive radiation from the jet 1, whereas the remaining diodes in the array will receive substantially only background radiation. The diodes in the array 5 are scanned or sensed periodically by means of a scanning circuit 7, from which a series of signal pulses are obtained with each scan, the number of pulses obtained being equal to the number of diodes in the array, and each of which signals has an amplitude corresponding to the amount of radiation received by the respective diode since the immediately preceding scan. Consequently, the output signal of the scanning circuit 7 has the form illustrated by the diagram 1 in Fig. 5. This diagram shows the output signal of the scanning circuit 7 for two mutually sequential scans, and the total scanning time for the array 5 is designated Ta, whereas the pause between two mutually sequential scans is designated To. The scanning or sampling frequency is consequently 1/Ta + To and is determined by a control circuit 8, which comprises, for instance, a voltage-controlled oscillator for determining the scanning frequency.

The output signal of the scanning circuit 7 is applied to a digitizing circuit 9, which determines which pulses of the signal have an amplitude exceeding a predetermined level, for instance the amplitude level A1 in Fig. 5, and which produces a square wave signal of corresponding duration, i.e. having the shape illustrated by the diagram II in Fig. 5. This square wave signal thus has a duration corresponding to that number of diodes in the array 5 which have received radiation exceeding a given level A1. This square wave signal is applied to a time-measuring circuit 10, for instance in the form of a digital counter driven from a clock pulse generator 11, which counter is kept running by the square wave signal from the circuit 9 and which consequently counts a number of clock pulses corresponding to the duration of said square wave signal. The clock pulses from the clock pulse generator 11 are illustrated in the diagram III in Fig. 5. The resulting count in the digital counter of the time measuring circuit 10 will consequently constitute a measure of the diameter d of the glass jet 1, and is supplied from the time measuring circuit 10 to a calculating circuit, which also receives the measured value of the flow velocity of the glass jet 1 and which calculates the volumetric flow rate of the glass jet on the basis of these measured values. The fact that there is no sharply defined border line between those diodes in the array 5 which receive radiation directly from the glass jet 1 and those diodes in the array which should theoretically receive only background radiation, creates a problem, however. This is apparent from the form of the signal illustrated by diagram 1 in Fig. 5 which shows that the output signals from the individual diodes increase gradually at the «edges» of the glass jet 1. As a consequence, the number of diodes providing an output signal exceeding the threshold value A1 will vary not only with the diameter of the glass jet 1 but also with the radiation intensity of the glass jet, i.e. with the temperature of the jet. An increased temperature of the glass jet will therefore give a larger measured value for the diameter, even if the diameter of the jet is in reality constant. According to the invention this measuring error is compensated for by applying the output signal of the scanning circuit 7 to a switch 12, which is controlled by the square wave signal from the circuit 9 in such a manner that it is closed only for the duration of this square wave signal, whereby only those output signals from the diodes of the array 5 which exceed the threshold level A1 are passed through the switch. These signals are applied to an averaging circuit 13 which determines the mean amplitude value of these signal pulses and supplies a corresponding signal to a control circuit 14. In the control circuit 14 this mean value signal from the circuit 13 is compared with a reference value Ar and in response to this comparison the control circuit 14 provides a control voltage to the voltage-controlled oscillator in the control circuit 8. In response to this control voltage the circuit 8 adjusts the scanning or sampling frequency for the array 5 in such a manner that the mean amplitude of the photodiode signals exceeding the threshold value A1 is maintained constant and equal to the reference amplitude Ar. It will be appreciated that this is possible, since the amplitude of the signal pulses from the diodes of the array 5 increases when the scanning or sampling period Ta + To increases, since each diode will then have time to receive a larger amount of radiation between each scan. In this way there is obtained an automatic compensation of the diameter measurement for any variations in the temperature of the glass jet 1, and thus in its radiation intensity.

In an apparatus according to the invention for measuring both the flow velocity and the diameter of a stream, flow or jet of molten, radiation emitting material the photodiode array 5 is preferably located between the two radiation detectors S1 and S2, whereby the velocity and the diameter will be measured at substantially the same location along the material flow.

**Claims**

1. A method for measuring the flow velocity of a freely falling stream of molten glass, comprising the steps of

a) detecting the intensity of the radiation emitted from a limited section of the glass stream at two separate detecting locations, which are arranged at a given distance apart along the path of the stream, and generating corresponding electric signals,

b) discriminating from said signals from said two detecting locations all pulse-like amplitude variations exceeding a predetermined amplitude, said amplitude variations originating from randomly occurring, local, discrete deviations in the intensity of the radiation of the glass stream caused by the presence of local inhomogeneities in the glass,

c) determining the time interval between the occurrence of such an amplitude variation in the signal from the upstream detecting location and the amplitude variation in the signal from the down-stream detecting location, which is caused by the same inhomogeneity in the glass as said amplitude variation in the signal from the upstream detecting location, and

d) using said time interval as a measure of the time taken for the glass stream to travel between said two detecting locations to calculate the flow velocity of the glass stream, wherein said time interval in step c) is determined by

e) determining repeatedly the time interval between the occurrence of an amplitude variation in the signal from the upstream detecting location and the subsequent amplitude variation occurring nearest in time in the signal from the downstream detecting location,

f) establishing on the basis of a plurality of thus determined time intervals which value is the one which occurs most frequently for these time intervals,

g) after having in step f) determined the most frequently occurring value of a plurality of time intervals measured according to step e), selecting from the continuously measured time intervals according to step e) only such time intervals as those having a value within a given limited range on both sides of said most frequently occurring value, and determining the mean value of a plurality of such selected time intervals, and

h) after having determined said mean value a first time on the basis of a given number of said selected time intervals, updating said mean value by again calculating for each new selected time interval a mean value of said given number of the lastest selected time intervals, whereafter only such time intervals are selected as those which have values within said given value range on both sides of the last calculated mean value, and said mean value is used as a measure of the time taken for the glass stream to travel between said two detecting locations when calculating the flow velocity of the glass stream in step d).

2. A method as claimed in claim 1, wherein the magnitude of said limited sections of the glass stream and said distance between the detecting locations and said given magnitude of said amplitude variations are so adapted to the occurrence of said inhomogeneities present in the glass and to the flow velocity of the glass stream that the mutual spacing in time between mutually sequential amplitude variations exceeding said given magnitude in said signals from said detecting locations exceeds the travel time of the glass stream between said detecting locations in at least about 8 to 10% of all cases.

3. A method for measuring the volumetric flow rate of a freely falling stream of molten glass, wherein, in addition to measuring the flow velocity of the glass stream by means of the method according to any one of claims 1 and 2, also the diameter of the glass stream is measured and the volumetric flow rate is calculated on the basis of said measured values for the flow velocity and the diameter.

4. A method as claimed in claim 3, wherein the diameter of the glass stream is measured by

a) using a linear photodiode array for detecting the radiation emitted by the glass stream along a line perpendicular to the flow direction of the stream,

b) scanning said photodiode array periodically with respect to the quantity of radiation received by each individual photodiode since an immediately preceding scan,

c) determining after each such scan the number of photodiodes which have received a quantity of radiation exceeding a given value and using this number of diodes together with the mutual spacing between the diodes as a measure of the diameter of the glass stream,

d) also determining after each such scan the mean value of the radiation quantities received by said number of photodiodes, and

e) controlling the periodicity of said scans of the photodiode array in such a way that said mean value is caused to correspond to a given reference value.

5. An apparatus for measuring the flow velocity of a freely falling stream of molten glass comprising

a) two radiation detectors (S1, S2) arranged to receive radiation emitted from a limited section (2, 3) of the glass stream (1) at two different locations spaced apart by a given distance (L) along the flow path of the glass stream, and to produce electric output signals corresponding to the intensity of said received radiation;

b) for each radiation detector a signal-processing circuit (F1, F2) for discriminating from the output signal of said radiation detector only those pulse-like amplitude variations (P) which exceed a given smallest amplitude (A), and to produce corresponding signal pulses (P') on its output;

c) circuit means (R, D) responsive to said signal pulses (P') for determining the time taken for the glass stream (1) to travel between said two detecting locations and for calculating the flow velocity of the glass stream on the basis thereof, wherein said circuit means according to c) include

d) a time measuring circuit (R) arranged to be started by one such signal pulse (P') originating from the upstream detector (S1) and to be stopped by the nearest following signal pulse (P') in time originating from the downstream detector (S2) and to generate a measuring result representing the time interval between said signal pulses, and to then be restarted by a signal pulse (P') originating from the upstream detector (S1); and

e) a calculating unit (D) arranged to receive said measuring results from the time-measuring circuit (R) and to establish on the basis of a multiplicity of such measuring results the most frequently occurring value (Y) thereof; to accept, after having determined the most frequently occurring value (Y) of a number of measured time intervals received from said time-measuring circuit (R), only measured time intervals having values within a given value range ($\pm Z\%$) on both sides of said most frequently occurring value, and to determine the mean value of a given number of such accepted measuring results; to update said mean value continuously by calculating for each new accepted measured time interval received from said time-measuring circuit (R) a new mean value on the basis of said given number of accepted measuring results last received, and to accept only such measured time intervals having values within said given value range on both sides of the last calculated mean value; and to use said mean value as a measurement of the time taken for the glass stream (1) to travel between the two detection locations, for calculating the flow velocity of the glass stream.

6. An apparatus as claimed in claim 5 for determining also the volumetric flow rate of the glass stream, comprising means (5—14) for measuring the diameter (d) of the glass stream (1), said calculating unit (D) being arranged to calculate the volumetric flow rate of the glass stream on the basis of said measured values representing the flow velocity and the diameter of the glass stream.

7. An apparatus as claimed in claim 6, wherein said means for measuring the diameter (d) of the glass stream (1) comprise a linear array of photodiodes (5) arranged to receive radiation emitted by the glass stream (1) along a line (6) perpendicular to the direction of flow, means (7) for scanning this array of photodiodes (5) periodically with respect to the amount of radiation received by each individual diode in the array since the preceding scan, means (9, 10, 11) for determining after each scan the number of diodes having received an amount of radiation exceeding a given level (A1) and for giving to said calculating unit (D) a measurement value representing said number of diodes, the calculating unit being arranged to utilize said measurement value as a measure of the diameter (d) of the glass stream (1) in the calculation of the volumetric flow rate of the material flow, means (13) for determining the mean value of the radiation quantities received by said number of diodes, means (14) for comparing said mean value with a reference value (Ar), and means (8) responsive to said comparison for controlling the periodicity of said scanning of said photodiode array (5) in a manner such that said mean value is caused to correspond to said reference value.

8. An apparatus as claimed in claim 7, wherein said photodiode array (5) is arranged to receive radiation emitted by said glass stream (1) at a location between said two locations (2, 3) where said radiation detectors (S1, S2) receive radiation emitted by the glass stream. .

**Patentansprüche**

1. Verfahren zur Messung der Strömungsgeschwindigkeit eines frei fallenden Stroms von geschmolzenem Glas, wobei das Verfahren folgende Schritte umfaßt:

a) Bestimmen der Intensität der Strahlung, die von einem begrenzten Abschnitt des Glasstroms an zwei getrennten Erfassungsstellen emittiert wird, die in einem vorgegebenen Abstand voneinander entlang der Strömungsbahn des Stroms angeordnet sind, und Erzeugen entsprechender elektrischer Signale,

b) Auswählen aller impulsähnlichen Amplituden-Schwankungen, die eine vorbestimmte Amplitude überschreiten, aus den Signalen von den beiden Erfassungsstellen, wobei die Amplituden-Schwankungen von zufällig verteilt auftretenden, örtlichen, unstetigen Abweichungen der Intensität der Strahlung de Glasstroms ausgehen, die durch die Gegenwart lokaler Inhomogenitäten im Glas verursacht werden,

c) Bestimmen des Zeitintervalls zwischen dem Erscheinen solch einer Amplituden-Schwankung im Signal der stromaufseitigen Erfassungsstelle und der Amplituden-Schwankung im Signal der stromabseitigen Erfassungsstelle, die durch dieselbe Inhomogenität im Glas verursacht wird wie die Amplitudenschwankung im Signal der stromaufseitigen Erfassungsstelle, und

d) Verwenden des Zeitintervalls als Maß der Zeit, die der Glasstrom für den Lauf zwischen den beiden Erfassungsstellen benötigt, zur Berechnung der Strömungsgeschwindigkeit des Glasstroms, worin das Zeitintervall in Schritt (c) bestimmt wird durch

e) wiederholtes Bestimmen des Zeitintervalls zwischen dem Erscheinen einer Amplituden-Schwankung im Signal der stromaufseitigen Erfassungsstelle und der nachfolgenden Amplituden-Schwankung, die zeitlich im Signal der strombseitigen Erfassungsstelle am nächsten erscheint,

f) Feststellen auf der Grundlage einer Mehrzahl so bestimmter Zeitintervalle, welcher Wert derjenige ist, der am häufigsten für diese Zeitintervalle auftritt,

g) nach Bestimmen (in Schritt (f)) des am häufigsten auftretenden Wertes einer Mehrzahl von Zeitintervallen, die gemäß Schritt (e) gemessen wurden, Auswählen aus der Zahl der kontinuierlich gemesenen Zeitintervallen gemäß Schritt (e) nur solcher Zeitintervalle, die einen Wert innerhalb eines vorgegebenen Bereichs auf beiden Seiten des am häufigsten auftretenden Wertes aufweisen, und Bestimmung der Mittelwertes einer Mehrzahl solch ausgewählter Zeitintervalle, und

h) nach erstmaliger Bestimmung des Mittelwertes auf der Grundlage einer vorgegebenen Anzahl ausgewählter Zeitinteralle Aktualisieren des Mittelwertes, indem man wiederum für jedes neue gewählte Zeitintervall eine Mittelwert aus der vorgegebenen Zahl der letzten ausgewählten Zeitintervalle errechnet, wonach nur solche Zeitintervalle ausgewählt werden, die Werte innerhalb des vorgegebenen Wertebereichs auf beiden Seiten des zuletzt errechneten Mittelwertest besitzt, und dieser Mittelwert als Maß der Zeit verwendet wird, die der Glasstrom für den Lauf zwischen den beiden Erfassungsstellen benötigt, wenn die Strömungsgeschwindigkeit des Glasstroms in Schritt (d) berechnet wird.

2. Verfahren nach Anspruch 1, worin die Gröbe der begrenzten Abschnitte de Glasstroms, der Abstand zwischen den Erfassungsstellen und die vorgegebene Größe der Amplitudenschwankungen an das Auftreten der Inhomogenitäten im Glas und die Strömungsgeschwindigkeit des Glasstroms so angepaßt sind, daß der zeitliche Abstand zwischen aufeinanderfolgenden Amplituden-Schwankungen, der die vorgegebene Größe der Signale von den Erfassungsstellen übersteigt, die Laufdauer des Glasstroms zwischen den Erfassungsstellen in weingstens etwa 8 bis 10 % aller Fälle übersteigt.

3. Verfahren zur Messung des Volumendurchsatzes eines frei fallenden Stroms von geschmolzenem Glas, worin zusätzlich zur Messung der Strömmungsgeschwindigkeit des Glasstroms mit Hilfe des Verfahrens nach einem der Ansprüche 1 und 2 auch der Durchmesser des Glasstroms gemessen wird und der Volumendurchsatz auf der Grundlage der gemessenen Werte für die Strömungsgeschwindigkeit und den Durchmesser berechnet wird.

4. Verfahren nach Anspruch 3, worin der Durchmesser des Glasstroms in folgender Weise gemessen wird:

a) Verwenden einer linearen Reihe von Photodioden zur Bestimmung der vom Glasstrom emittierten Strahlung entlang einer Linie, die senkrecht zur Fließrichtung des Stroms verläuft,

b) periodisches Abtasten der Photodiodenreihe in Bezug auf die Strahlungsmenge, die von jeder einzelnen Photodiode seit einem unmittelbar vorhergehenden Abtastvorgang empfangen worden ist,

c) nach jedem derartigen Abtastvorgang Bestimmen der Zahl der Photodioden, die eine Strahlungsmenge empfangen haben, die einen vorgegebenen Wert übersteigt, und Verwenden dieser Diodenzahl zusammen mit dem Abstand zwischen den Dioden als Maß für den Durchmesser des Glasstroms,

d) außerdem Bestimmen des Mittelwertes der von dieser Zahl Photoidoden empfangenen Strahlungsmengen nach jedem derartigen Abtastvorgang, und

e) Steuern der Periodizität der Abtastvorgänge der Photodiodenreihe in der Weise, daß der Mittelwert einem vorgegebenen Bezugswert entspricht.

5. Vorrichtung zum Messen der Strömungsgeschwindigkeit eines frei fallenden Stroms von geschmolzenem Glas, umfassend

a) zwei Strahlungsdetektoren (S1, S2), die in der Weise angeordnet sind, daß sie die von einem begrenzten Abschnitt (2, 3) des Glasstroms (1) emittierte Strahlung an zwei verschiedenen Stellen aufnehmen, welche in einem vorgegebenen Abstand (L) entlang der Strömungsbahn des Glasstroms angeordnet sind, und elektrische Ausgangssignale erzeugen, die der Intensität der empfangenen Strahlung entsprechen;

b) für jeden Strahlungsdetektor eine Signalverarbeitungsschaltung (F1, F2) zum Auswählen nur derjenigen impulsähnlichen Amplituden-Schweankungen (P) aus dem Ausgangssignal des Strahlungsdetektors, die eine vorgegebene kleinste Amplitude (A) übersteigen, und zum Erzeugen entsprechender Signalimpulse (P') an ihrem Ausgang;

c) Schaltungseinrichtung (R, D), die auf die Signalimpulse (P') ansprechen, zur Bestimmung der Zeit, die der Glasstrom (1) für den Lauf zwischen den beiden Erfassungsstellen benötigt, und zur Berechnung der Strömungsgeschwindigkeit des Glasstroms auf der Basis dieser Werte, worin die Schaltungseinrichtungen entsprechend (c) einschließen

d) eine Zeitmeßschlatung (R), die so angeordnet ist, daß sie durch einen derartigen Signalimpuls (P') gestartet wird, der von dem stromaufseitigen Detektor (S1) ausgeht, und daß von dem zeitlich nächstfolgenden Signalimpuls (P') der von dem stromabseitigen Detektor (S2) ausgeht, gestoppt wird und daß sie ein Meßergebnis erzeugt, das das Zeitintervall zwischen diesen Signalimpulsen wiedergibt, und dann durch einen von dem stromabseitigen Detektor (S1) ausgehenden Signalimpuls (P') wiedergestartet wird; und

e) eine Recheneinheit (D), die in der Weise angeordnet ist, daß sie die Meßergebnisse von der Zeitmeßschaltung (R) empfängt und auf der Grundlage einer Vielzahl solcher Meßergebnisse den am häufigsten auftretenden Wert (Y) dieser Meßergebnisse erstellt, nach Bestimmung des am häufigsten vorkommenden Wertes (Y) einer Anzahl gemessener Zeitintervalle, die sie von der Zeitmeßschaltung (R) empfangen hat, nur gemessene Zeitintervalle mit Werten innerhalb eines vorgegenenen Wertebereichs (± Z %) auf beiden Seiten des am häufigsten vorkommenden Wertes aufnimmt und den Mittelwert aus einer vorgegebenen Anzahl solcher aufgenommener Meßergebnisse bestimmt, daß sie den Mittelwert kontinuierlich aktualisiert, indem sie für jedes neue akzeptierte gemessene Zeitintervall, das von der Zeitmeßschaltung (R) erhalten wurde, einen neuen Mittelwert auf der Basis der vorgegebenen Zahl von akzeptierten Meßergebnissen, die zuletzt erhalten worden sind, errechnet, und daß sie nur soche gemessenen Zeitintervalle akzeptiert, die Werte innerhalb des vorgegebenen Wertebereichs auf beiden Seiten des zuletzt errechneten Mittelwertes aufweisen, und daß sie den Mittelwert als Maß für die Zeit verwendet, die der Glasstrom (1) für seinen Lauf zwischen den beiden Erfassungsstellen benötigt, um die Strömungsgeschwindigkeit des Glasstrom zu errechnen.

6. Vorrichtung nach Anspruch 5 zur zusätzlichen Bestimmung des Volumendurchsatzes des Glasstroms, umfassend Einrichtungen (5—14) zum Messen des Durchmessers (d) des Glasstroms (1), wobie die Recheneinheit (D) in der Weise angeordnet ist, daß sie den Volumendurchsatz des Glasstroms auf der Grundlage der gemessenen Werte, die die Strömungsgeschwindigkeit und den Durchmesser des Glasstroms darstellen, errechnet. .

7. Vorrichtung nach Anspruch 6, worin die Einrichtungen zum Messen des Durchmessers (d) des Glasstroms (1) eine lineare Reihe von Photodioden (5) umfassen, die in der Weise angeordnet sind, daß sie die von Glasstrom (1) entlang einer Linie (6) senkrecht zur Strömungsrichtung abgegebene Strahlung empfangen,

Einrichtungen (7) zum periodischen Abtasten dieser Reihe von Photodioden (5) in Bezug auf die von jeder einzelnen Diode der Reihe seit dem vorangehenden Abtastvorgang empfangenen Strahlungsmenge,

Einrichtungen (9, 10, 11) zum Bestimmen der Zahl von Dioden nach jedem Abtastvorgang, die eine Strahlungsmenge empfangen haben, welche ein vorgegebenes Niveau (A1) übersteigt, und zum Zuführen eines Meßwertes, der diese Diodenzahl darstellt, zu der Recheneinheit (D), wobei die Recheneinheit in der Weise angeordnet ist, daß sie den Meßwert als Maß für den Durchmesser (d) des Glasstroms (1) bei der Berechnung des Volumendurchsatzes des Materialstroms verwendet

Einrichtungen (13) zum Bestimmen des Mittelwertes der von der Zahl der Dioden empfanenen Strahlungsmengen,

Einrichtungen (14) zum Vergleichen dieses Mittelwertes mit einen Bezugswert (Ar) und

Einrichtungen (8), die auf den Vergleichswert ansprechen, zur Steuerung der Periodizität der Abtastung der Photodiodenreihe (5) in der Weise, daß der Mittelwert dem Bezugswert entspricht.

8. Vorrichtung nach Anspruch 7, worin die Photodiodenreihe (5) so angeordnet ist, daß sie die von dem Glasstrom (1) emittierte Strahlung an einer Stelle zwischen den beiden Stellen (2, 3) empfängt, wo die Strahlungsdetektoren (S1, S2) die von Glasstrom abgegebene Strahlung empfangen.

**Revendications**

1. Procédé pour mesurer la vitesse d'écoulement d'un courant de verre en fusion tombant en chute libre, comprenant les étapes suivantes:

a) détecter l'intensité du rayonnement émis par une section limitée du courant de verre en deux endroits de détection séparés, disposés à une distance donnée le long du trajet du courant, et produire des signaux électriques correspondants;

b) discriminer parmi ces signaux en provenance de ces deux endroits de détection, toutes les variations d'amplitude pulsée dépassant une amplitude prédéterminée, ces variations d'amplitude provenant de déviations aléatoires, locales et discrètes de l'intensité du rayonnement du courant de verre provoquées par la présence d'hétérogénéités locales dans le verre;

c) déterminer l'intervalle de temps entre l'apparition d'une telle variation d'amplitude du signal provenant de l'endroit de détection en amont et la variation d'amplitude subséquente dans le signal en provenance de l'endroit de détection en aval, variation quie est provoquée par la même hétérogénéité dans le verre que la variation d'amplitude dans le signal en provenance de l'endroit de détection en amont; et

d) utiliser cet intervalle de temps comme mesure du tempts pris par le courant de verre pour se déplacer entre les deux endroits de détection pour calculer la vitesse d'écoulement du courant de verre, dans lequel l'intervalle de temps dans l'étape c) est déterminé par le fait que:

e) on détermine de façon répétitive l'intervalle de temps entre l'apparition d'une variation d'amplitude dans le signal en provenance de l'endroit de détection amont et la variation d'amplitude subséquente la plus proche dans le temps apparaissant dans le signal en provenance de l'endroit de détection aval;

f) on établit, sur la base d'une multiplicité de ces intervalles de temps ainsi déterminés, quelle valeur est celle qui apparaît le plus fréquemment dans ces intervalles de temps;

g) après avoir, dans l'étape f), déterminé la valeur apparaissant le plus fréquemment dans une multiplicité d'intervalles de temps mesurés selon l'étape e), on sélectionne parmi les intevalles de temps mesurés de façon continue selon l'étape e) seulement ces intervalles de temps dont la valeur est comprise dans un plage limitée donnée de part et d'autre de la valeur la plus fréquente, et l'on détermine la valeur moyenne d'une multiplicité d'intervalles de temps ainsi sélectionnés; et

h) après avoir déterminé une première fois cette valeur moyenne sur la base d'un nombre donné d'intervalles choisis, on rectifie cette valeur moyenne en calculant à nouveau, pour chaque nouvel intervalle de temps choisi, und valeur moyenne du nombre donné des derniers intervalles sélectionnés, et l'on ne choisit ensuite que les intervalles dont les valeurs sont comprises dans ladite plage de valeurs de part et d'autre de la valeur moyenne calculée en dernier, et on utilise cette valeur moyenne comme mesure du temps nécessaire au courant de verre pour se déplacer entre les deux endroits de détection lors du calcul de la vitesse d'écoulement dur courant de verre dans l'étape d).

2. Procédé selon la revendication 1, dans lequel la grandeur de ces sections limitées du courant de verre et la distance entre les endroits de détection et cette grandeur donnée des variations d'amplitude sont adaptées de telle manière à l'apparition des hétérogénéités dans le verre et à la vitesse d'écoulement du courant de verre que le décalage temporel mutuel entre des variations d'amplitude séquentielles dépassant ladite grandeur donnée dans les signaux en provenance des endroits de détection soit plus grand, dans au moins environ 8 à 10% de tous les cas, que le temps déplacement du courant de verre entre ces endroits de détection.

3. Procédé pour mesurer le débit volumique d'un courant de verre en fusion tombant en chute libre, dans lequel on mesure, en plus de la vitesse d'écoulement du courant de verre par le procédé selon l'une des revendications 1 et 2, également le diamètre du courant de verre et dans lequel on calcule le débit volumique sur la base de ces valeurs mesurées de la vittesse d'écoulement et du diamètre.

4. Procédé selon la revendication 3, dans lequel le diamètre du courant de verre est mesuré:

a) en utilisant un série linéaire de photodiodes pour détecter le rayonnement émis par le courant de verre le long d'une ligne perpendiculaire à la direction d'écoulement du courant,

b) en balayant périodiquement ladite série de photodiodes quant à la quantité de rayonnement reçue par chaque photodiode individuelle depuis un balayage immédiatement précédent,

c) en déterminant, après chaque balayage, le nombre de photodiodes ayant reçu une quantité de rayonnement excédant une valeur donnée, et en utilisant ce nombre de diodes conjointement à la distance entre les diodes comme mesure du diamètre du courant de verre,

d) en déterminant également, après chaque balayage, la valeur moyenne des quantités de rayonnement reçues par ce nombre de photodiodes, et

e) en réglant la périodicité des balayages de la série de photodiodes de telle manière que la valeur moyenne corresponde à une valuer de référence donnée.

5. Appareil pour mesurer la vitesse d'écoulement d'un courant de verre en fusion tombant en chute libre, comprenant:

a) deux détectures de rayonnement (S1, S2) agencés pour recevoir un rayonnement émis par une section limitée (2, 3) due courant de verre (1) à deux endroits différents séparés par une distance donnée (L) le long du trajet d'écoulement du courant de verre, et pour produire des signaux électriques de sortie correspondant à l'intensité du rayonnement reçu;

b) un circuit de traitement des signaux (F1, F2) pour chaque détecteur de rayonnement afin de discriminer dans le signal de sortie de ce détecteur de rayonnement seulement les variations pulsées d'amplitude (P) qui dépassent une plus petite amplitude (A) donnée, et pour produire des impulsions de siganxu correspondantes (P') dans sa sortie;

c) un circuit (R, D) sensible à ces impulsions de signaux (P') pour déterminer le temps nécessaire au courant de verre (1) pour se déplacer entre les deux endroits de détection et pour calculer la vitesse d'écoulement du courant de verre sur la base de cette détermination, dans lequel le circit selon c) comporte:

d) un circuit de mesure du temps (R) agencé pour démarrer sur un tel signal pulsé (P') en provenance du détecteur amont (S1) et pour être arrêté par le premier signal pulsé (P') subséquent en provanance du détecteur aval (S2), et pour produire un résultat de mesure représentant l'intervalle temporel entre ces signaux pulsés, et pour redémarrer ensuite sur un signal pulsé (P') en provenance du détecteur amont (S1); et

e) un dispositif de calcul (D) agencé pour recevoir les résultats de mesures en provenance du circuit de mesure du temps (R) et pour établir, sur la base d'une multiplicité de tels résultats de mesures, la valeur la plus fréquente (Y) et pour n'accepter, après détermination de la valeur la plus fréquente (Y) d'une multiplicité d'intervalles de temps mesurés fournie par le circuit de mesure du temps (R), que des intervalles temporels mesurés dont les valeurs sont comprises dans une plage de valeurs données ($\pm Z\%$) de part et d'autre de cette valeur la plus fréquente, et pour déterminer la valeur moyenne d'un nombre donné de ces résultats de mesures acceptés, pour rectifier continuellement cette valeur moyenne en calculant pour chaque nouvel intervalle de temps mesuré accepté reçu du circuit de measure du temps (R) une nouvelle valeur moyenne sur la base de ce nombre donné de résultats de mesures acceptés reçus en dernier, et pour n'accepter que les intervalles temporels mesurés dont les valeurs se trouvent à l'intérieur de cette plage de valeurs données de part et d'autre de la dernière valeur moyenne calculée; et pour utiliser cette valeur moyenne comme mesure du temps nécessaire au courant de verre (1) pour se déplacer entre les deux endroits de détection, dans le calcul de la viteese d'écoulement du courant de verre.

6. Appareil selon la revendication 5 pour déterminer également le débit volumique du courant de verre, comprenant des moyens (5—14) pour mesurer le diamètre (d) du courant de verre (1), dispositif de calcul (D) étant agencé pour calculer le débit volumique dur courant de verre sur la base de ces valeurs mesurées représentant la vitesse d'écoulement et le diamètre du courant de verre.

7. Appareil selon la revendication 6, dans lequel les moyens pour mesurer le diamètre (d) du courant de verre (1) comprennent une série linéaire de photodiodes (5) agencées pour recevoir le rayonnement émis par le courant de verre (1) le long d'une ligne (6) perpendiculaire à la direction de l'écoulement, des moyens (7) pour balayer périodiquement cette série de photodiodes (5) quant à la quantité de rayonnement reçue par chaque diode individuelle dans la série depuis le balayage précédent, des moyens (9, 10, 11) pour déterminer, après chaque balayage, le nombre de diodes ayant reçu une quantité de rayonnement dépassant un niveau donné (A1) et pour donner au dispositif de calcul (D) une valeur de mesure représentant ce nombre de diodes, le dispositif de calcul étant agencé pour utiliser cette valeur de mesure comme mesure du diamètre (d) du courant de verre (1) dans le calcul du débit volumique du flux de matière, des moyens (13) pour déterminer la valeur moyenne des quantités de rayonnement reçues par ce nombre de didoes; des moyens (14) pour comparer la valeur moyenne à une valeur de référence (Ar), et des moyens (8) répondant à cette comparaison pour régler la périodicité du balayage de cette série de photodiodes (5) de telle façon que la valeur moyenne corresponde à cette valeur de référence.

8. Appareil selon la revendication 7, dans lequel la série de photodiodes (5) est agencée pour recevoir un rayonnement émis par le courant de verre (1) à un endroit situé entre les deux endroits (2, 3) où les détecteurs de rayonnement (S1, S2) reçoivent le rayonnement émis par le courant de verre.

Fig.1

Fig.2

*Fig. 3*

*Fig. 4*

*Fig. 5*

2